# EUROPEAN PATENT APPLICATION

(11) **EP 1 211 686 A2**
(43) Date of publication of application: **05.06.2002**
(21) Application number: 01309354.7
(22) Date of filing: 05.11.2001
(51) Int. Cl.: G11B 27/00, G07F 17/16

(54) **Information recording apparatus and fee charging method thereof**

(30) Priority: 15.11.2000 JP 2000348721
(71) Applicant: SONY CORPORATION, Tokyo 141 (JP)
(72) Inventor: Sato, Masahiko, Sony Corporation, Tokyo 141 (JP); Kamaya, Naoki, Sony Corporation, Tokyo 141 (JP); Yoneyama, Shigeyuki, Sony Corporation, Tokyo 141 (JP); Toshikage, Hideki, Sony Corporation, Tokyo 141 (JP)
(74) Representative: Horner, David Richard

(57) **Abstract**

The invention relates to an apparatus and method which enables charging in a reasonable manner for a fee regarding an information recording apparatus recording information into a recording medium.

Information received through a tuner or reproduced through a digital reproducing section is converted by a format conversion circuit, supplied to a digital, an analog or a memory card type recording and reproducing section where dubbing is carried out. Such information can be also stored in a storage medium such as a HDD and then supplied and dubbed in the pertinent recording and reproducing section. When the recording medium containing recorded information is unloaded, charging is done through a charging section. Once unloaded, the recording medium can be easily taken out and used, thus such a convenience can be charged as well. In addition, the charging can be done corresponding to a number of recording media containing recorded information. Furthermore, a user can verify whether recording has been carried out properly, before charging.

## Description

### BACKGROUND OF THE INVENTION

### 1.Field of the Invention

The present invention relates to an information recording apparatus for recording information in a recording medium and a fee charging method thereof.

### 2.Description of the Related Art

It is known in the related art that information sent by digital satellite broadcasting, information sent by a communication network such as the Internet, information stored in information storing means such as built-in hard disks, and recorded information in a predetermined recording medium have hitherto been recorded into another predetermined recording medium. It is also known that charging (of fees, billing or the like) is made at the time of recording.

With regards to another predetermined recording medium in which information has been recorded as mentioned above, there is possible a case of using the recording medium without unloading thereof from the recording and reproducing apparatus and another case of unloading the medium from the apparatus. In the latter case, the medium can be distributed to other people and stored separately from the recording and reproducing apparatus. It follows then that charging a same amount of fee for both the former and the latter could be unfair.

Accordingly, it is desired to provide an information recording apparatus and any other similar device/apparatus that can charge service in a more reasonable manner.

### SUMMARY OF THE INVENTION

The present invention provides an information recording apparatus or the like which enables charging of a fee in a reasonable way by charging (billing or the like) when a recording medium containing recorded information is unloaded.

An information recording apparatus of an embodiment of the present invention includes information recording means for recording information in a first recording medium, operation means for unloading (ejecting / removing / taking out / pulling out / removing, etc.) the first recording medium in which information has been recorded by the information recording means, unloading means for unloading the first recording medium based on unloading operation through the operation means, and charging means for charging a fee when the first recording medium is unloaded by the unloading means.

Also, a fee charging method in an information recording apparatus of an embodiment of the present invention is a fee charging method in the information recording apparatus recording information in the first recording medium and unloading the first recording medium based on user's unloading operation, charging a fee when the first recording medium is unloaded.

In embodiments of the present invention, information is recorded in the first recording medium. The information is composed of, for example, information sent by digital satellite broadcasting, information sent from communication networks such as the Internet, information stored in information storing means such as built-in hard disks, and recorded information in a second recording medium. The first recording medium is unloaded based on user's unloading operation, whereupon charging is made when unloading.

In this manner, charging is made when the first recording medium is unloaded and the charge is thus made in a reasonable way. Namely, the charges are made for the number of pieces of the recording medium in which information has been recorded and which has been unloaded. Also, the user can confirm whether or not recording has been properly performed in the recording medium prior to the charging, and if the recording has not been properly performed, the information can be recorded again.

It has to be noticed that when there is an unloading operation of the first recording medium, a display preferably appears for the user to confirm that charging will be made, thereby permitting the user to assure that charging is made when the first recording medium in which the information was recorded is unloaded.

Further, the quality of information to be recorded in the first recording medium can preferably be selected and the amount of charge can be changed according to the quality of information to be recorded in the first recording medium, so that the user can avoid any charge for unnecessary information. The quality of information includes, for example, quality based on the image quality, quality based on the broadcasting system, quality based on the number of languages, quality based on the audio format, and quality based on a regional code.

Still further, recording commercial message information together with other information in the first recording medium of embodiments of the present invention is made selectable, whereas the charge is reduced in amount when the commercial message information is recorded together with the other information in the first recording medium, thereby contributing to curtailing the user's expenses. In this case, the size of the reduced amount may vary depending on the quantity of the commercial message information.

Furthermore, an information recording apparatus of another embodiment of the present invention includes information storage means for storing information in an information storage, information recording means for recording information stored in the information storage by the information storage means in the first recording medium, operation means for unloading (ejecting or the like) the first recording medium in which information was recorded by the information recording means, unloading means for unloading the first recording medium based on the user's unloading operation by the operation means, and charging means for first charging when the information is stored in the information storage by the information storage means and for second charging when the first recording medium is unloaded.

Moreover, an information recording method of another embodiment of the present invention is a fee charging method in the information recording apparatus storing information in the information storage, subsequently recording the information stored in the information storage in the first recording medium, wherein the first charging is made when the information is stored in the information storage and the second charging is made when the first recording medium is unloaded.

In embodiments of the present invention, information is stored in the information storage, where after the information stored therein is recorded in the first recording medium. The information stored therein includes, for example, information sent by digital satellite broadcasting, information sent by communication networks such as the Internet, and information stored in the second recording medium. The first recording medium is unloaded based on the user's unloading operation. Then, the first charging is made when the information is stored in the information storage, and the second charging is further made when the first recording medium containing the recorded information is unloaded.

In this manner, charging is made when information is stored in the information storage, and another charging is made when the first recording medium in which the information was recorded (dubbed) is unloaded, thus enabling charging in a reasonable manner. Namely, when unloading the first recording medium containing the recorded information, it can be distributed to other people and can be stored separately from the information recording apparatus, resulting in enhancing its usefulness as compared to the condition of the information stored in the information storage. Moreover, this increased convenience can be charged as well.

Another advantage is that charging can be performed for the unloaded number of units of the recording medium containing the recorded information. Moreover, the user can confirm prior to charging whether or not the recording has been properly performed, and if not, recording of the information can be performed again.

It should be appreciated that when unloading the first recording medium of embodiments of the present invention, a charging notification message preferably appears on a display for the user to confirm that there will be a charge, enabling the user to confirm further charging when the first recording medium with recorded information is unloaded.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The invention will now be described further, by way of example only, with reference to preferred embodiments thereof as illustrated in the accompanying drawings, in which:
Fig. 1 is a block diagram showing a construction of an information recording and reproducing apparatus, according to a preferred embodiment of the present invention;
Fig. 2 is a perspective view showing an external appearance of the information recording and reproducing apparatus, according to a preferred embodiment of the present invention;
Fig. 3 is a perspective view showing an example of using a memory card having information recorded in the information recording and reproducing apparatus for a cellular phone, according to a preferred embodiment of the present invention;
Fig. 4 is a flowchart showing a process of instructing recording, according to a preferred embodiment of the present invention;
Fig. 5 is a flowchart showing a process of setting dubbing conditions, according to a preferred embodiment of the present invention;
Fig. 6 is a flowchart showing a process of setting image quality, according to a preferred embodiment of the present invention;
Fig. 7 is a flowchart showing a process of setting broadcasting system, according to a preferred embodiment of the present invention;
Fig. 8 is a flowchart showing a process of setting number of languages, according to a preferred embodiment of the present invention;
Fig. 9 is a flowchart showing a process of setting audio format, according to a preferred embodiment of the present invention;
Fig. 10 is a flowchart showing a process of setting region code, according to a preferred embodiment of the present invention;
Fig. 11 is a flowchart showing a process of setting addition of commercial message, according to a preferred embodiment of the present invention;
Fig. 12 is a flowchart showing a process of unloading recording medium, according to a preferred embodiment of the present invention; and
Fig. 13 is a diagram showing a list of the items set for the dubbing conditions, according to a preferred embodiment of the present invention.

### DETAILED DESCRIPTION OF THE PREFERRED EMBODIMENTS

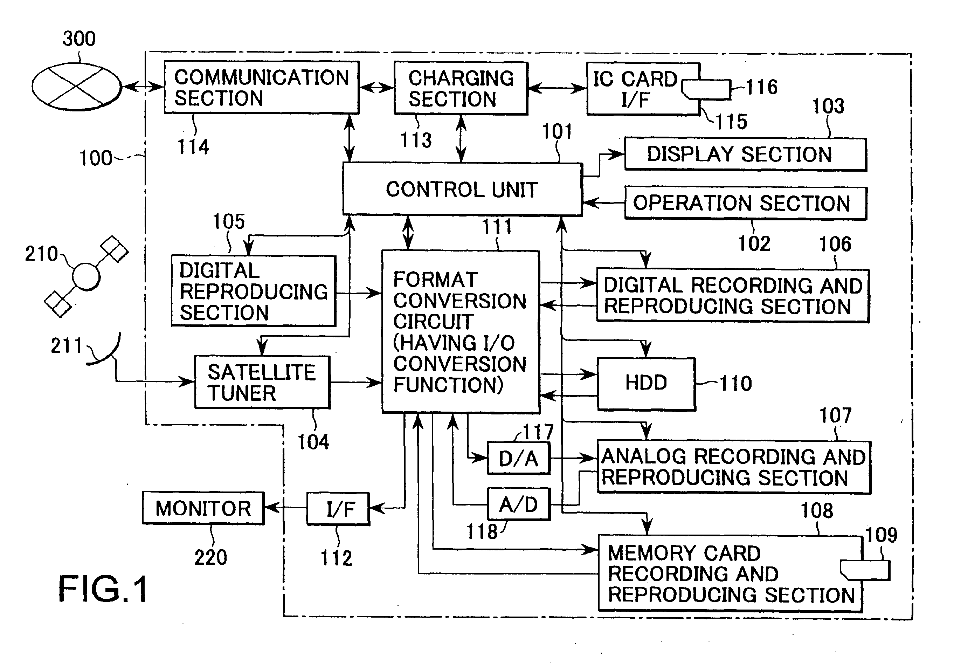

A preferred embodiment of the present invention will be described with reference to the accompanying drawings. Referring to Fig. 1, there is described the structure of an information recording and reproducing apparatus 100 of the preferred embodiment.

The information recording and reproducing apparatus 100 includes a microcomputer with a control unit 101 for controlling the operation of the apparatus as a whole. The control unit 101 is composed of an operation section 102 for the user to perform various operations, liquid crystal display device (LCD) or the like and is connected to a display section 103 indicating the status of the information recording and reproducing apparatus 100. In the control unit 101 there are provided, though not shown, a ROM, wherein an operation program and necessary data are pre-stored, and a RAM used for a working area or the like.

Further, the information recording and reproducing apparatus 100 has a satellite tuner 104 for receiving satellite broadcasting. Into the satellite tuner 104, broadcasting signals from a satellite (a communication satellite or a broadcasting satellite) are inputted via a reception antenna 211. Information received by the satellite tuner 104 includes, in addition to image information and audio information, information on whether or not dubbing (recording in a recording medium) is authorized or information on whether or not charging of a fee is necessary when carrying out that dubbing. The dubbing authorization information and charging information obtained by the satellite tuner 104 are supplied to the control unit 101.

In addition, the information recording and reproducing apparatus 100 includes a digital reproducing section 105. The digital reproducing section is composed of, for example, a DVD (Digital Versatile Disc) reproducing unit, DV (Digital Video) video cassette recorder, D-VHS (Digital VHS) video cassette recorder or the like. Recording media handled by this digital reproducing section 105 include, in addition to the recording of image information and audio information, the recording of information on whether or not dubbing is authorized at reproduction or information on whether charging is necessary when carrying out dubbing. The dubbing authorization information and charging information played back by the digital reproducing section 105 are supplied to the control unit 101.

Also, the information recording and reproducing apparatus 100 has a digital recording reproducing section 106. The digital recording reproducing section 106 can digitally record image information, audio information or the like. The digital recording reproducing section 106 is composed of, for example, a disk drive handling recordable disks such as a DVD-RAM disk, DVD-RW disk, and DVD+RW disk, DV video cassette recorder, D-VHS video cassette recorder, and removable HDD (Hard Disk Drive). The digital recording and reproducing section 106 is, for example, able to dub the entire information recorded in a DVD or select a section thereof, or further alter any section thereof and subject it to dubbing.

Still further, the information recording and reproducing apparatus 100 has an analog recording and reproducing section 107. The recording and reproducing section 107 is composed of, for example, a VHS video cassette recorder, 8 millimeter video cassette recorder or the like. It is not possible for an analog recording medium, because of its makeup, to dub all information recorded in a DVD, so that a section thereof is selected and subjected to dubbing. Also, in terms of image quality, for example, recording cannot be performed in the HD image, and therefore, recording can be rendered only at a limited extent.

Moreover, the information recording and reproducing apparatus 100 has a memory card recording and reproducing section 108. This memory card recording and reproducing section 108 subjects a memory card 109 to recording and reproducing (including playing back) image information and audio information. The memory card 109 in which image information and audio information are recorded by means of the memory card recording and reproducing section 108 can be used for personal computers with a function of attaching memory card insertion, portable mobile terminals, cellular phones or the like.

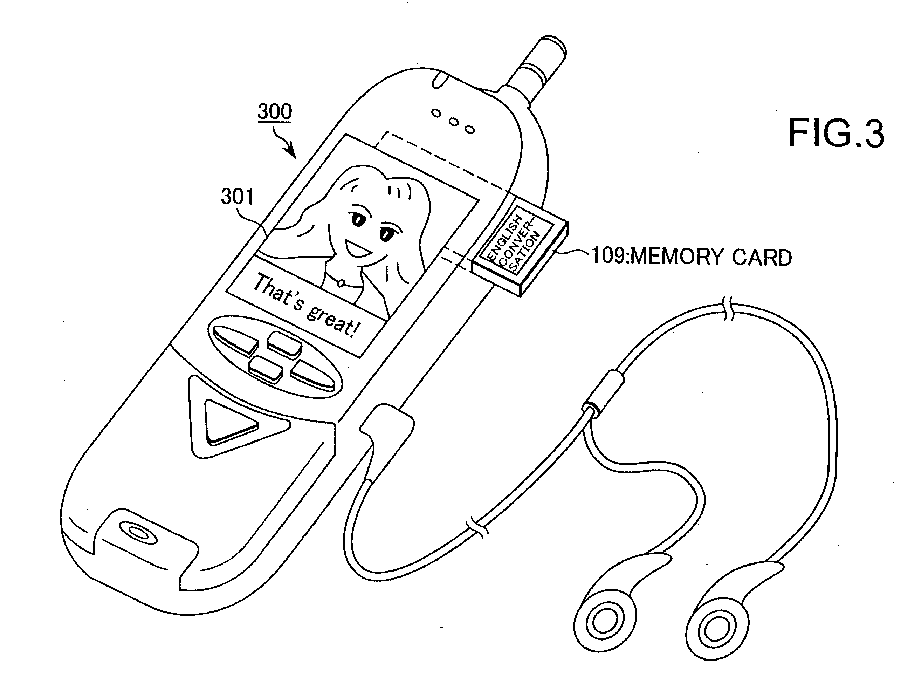

In this instance, since a large recording capacity cannot be made available, for example, image information is recorded in an audio embedded motion picture called "MPEG movie," that is, image information and audio information to be recorded in a highly compressed form. For example, suppose image information and audio information relating to English conversation are recorded on the memory card 109. Then, for example, as shown in Fig. 3, attaching this memory card 109 to a cellular phone 300 makes it possible for anyone to listen to the audio while displaying images on the display section 301, and as necessary, characters can be displayed in a superimposed form, thereby making it possible to study English conversation whenever and wherever one wishes.

Additionally, the information recording and reproducing apparatus 100 is provided with an HDD 110 as the information storage. In the HDD 110 there are stored, for example, information received by the above-mentioned satellite tuner 104, information played back by the digital reproducing section 105 or the like. In this manner, the image information and the audio information stored in the HDD 110 are, for example, read out and used for image display and audio output or used as the recording information when dubbing.

Further, the information recording and reproducing apparatus 100 has a format conversion circuit 111. The format conversion circuit 111 is interposed between the above-mentioned satellite tuner 104, the digital reproducing section 105, the digital recording and reproducing section 106, the analog recording and reproducing section 107, the memory card recording and reproducing section 108, and the HDD 110, performing input/output switching processing and format conversion process of dubbing, and further output processing to a monitor to be explained later. In this case, a D/a converter 117 is inserted into a signal route from the format conversion processing 111 to the analog recording and reproducing section 107. Also, an A/D converter 118 is inserted in a signal route from the analog recording and reproducing section 107 to the format conversion processing 111.

Still further, the information recording and reproducing apparatus 100 has an interface circuit 112 to connect a monitor 220 to the format conversion circuit 111. In the monitor 220, it is possible to monitor output from the reproducing section, the dubbing status in the recording section, or reproducing output of the recording and reproducing section not associated with this reproducing and dubbing. It has to be noticed that it may be so adapted as to connect a plurality of monitors 220.

Also, the information recording and reproducing apparatus 100 has a fee charging section 113 and a communication section 114 to connect the fee charging section 113 via a communication network 300 such as a telephone circuit and the Internet to an authentication/charging agency (not illustrated). To the fee charging section 113 is connected an IC card interface 115 to which an IC card 116 exclusively for charging operation is attached.

The fee charging section 113 performs charging process of receiving information by the satellite tuner 104, dubbing information received by the satellite tuner 104, dubbing information played back by the digital reproducing section 105, dubbing information stored in the HDD 110, and unloading recording media to which information was recorded. In this case, the fee charging section 113 uses the IC card 116 to connect to the authentication/charging agency and controls information such as user's individual information, information on authorization of use, usage status information, and information on charging. It has to be noticed that a prepaid card function may very well be furnished to the IC card 116 to enable charging to be performed until the prepaid fee is exhausted.

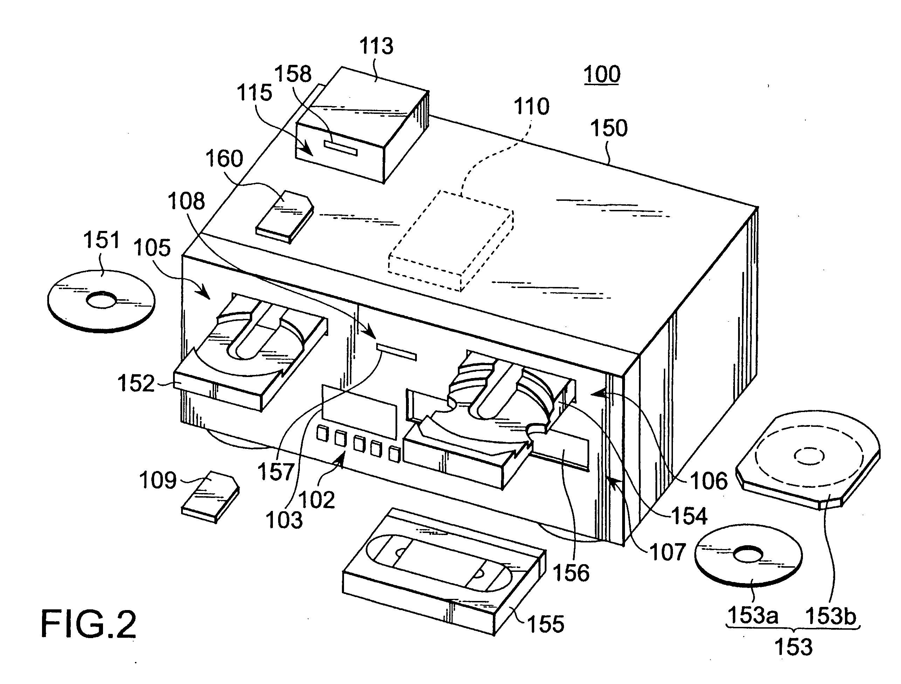

Fig. 2 illustrates the external view of the information recording and reproducing apparatus 100 shown in Fig. 1. The apparatus body 150 is formed as a whole in a basic quadratic prism form. In this example, the digital reproducing section 105 includes a DVD reproducing section. Loading and unloading of a DVD disk 151 used by the DVD reproducing section are performed by using a disk tray 152 placed on the front section of the apparatus body 150. Fig. 2 shows the state of the disk tray 152 being unloaded.

Also, in this example, the digital recording and reproducing section 106 includes a disk drive handling recordable disks such as a DVD-RAM disk, DVD-RW disk, and DVD+RW disk. Insertion and unloading of the disk 153 handled by the disk drive are performed by using the disk tray 154 placed on the front section of the apparatus body 150. Fig. 2 shows the state of the disk tray 154 being unloaded. It is so constructed that for the disk 153 herein, in addition to a blank disk 153a, a high-capacity disk 153b containing a cartridge can also be used. The disk tray 154 is a compatible type capable of accommodating both disks 153a and 153b.

Further, in this example, the analog recording and reproducing section 107 includes a VHS video cassette recorder. On the front section of the apparatus body 150, there is provided an loading/unloading slot 156 of a tape cassette 155 used by the VHS video cassette recorder.

Still further, on the front section of the apparatus body 150, there is provided an insertion slot 157 for inserting the memory card 109 handled by the memory card recording and reproducing section 108. At the same time, on the front section thereof are arranged the operation section 102 and the display section 103.

Moreover, the HDD 110 as information storage is fixed to the inside of the apparatus body 150. The fee charging section 113 is a separate section from the apparatus body 150, placed, for example, on top of the apparatus body 150. In this case, the IC card interface 115 is built in the fee charging section 113, an insertion slot 158 of the IC card 116 being provided on the front section. It has to be noticed that the fee charging section 113 may be constructed so as to be built in the apparatus body 150.

In the information recording and reproducing section 100 shown in Fig. 1, image information and audio information received by the satellite tuner 104 or image information and audio information reproduced by the digital reproducing section 105 are subjected to format conversion in the format conversion circuit 111 and subsequently supplied to the digital recording and reproducing section 106, the analog recording and reproducing section 107 or the memory card recording and reproducing section 108, where the information can be dubbed.

Also, in the information recording and reproducing apparatus 100, image information and audio information received by the satellite tuner 104 or image information and audio information played back by the digital reproducing section 105 can be supplied via the format conversion circuit 111 to the HD110 and stored there. Furthermore, image information and audio information stored in the HDD 110 are read out and subjected to format conversion by the format conversion circuit 111, subsequently supplied to the digital recording and reproducing section 106, the analog recording and reproducing section 107 or the memory card recording and reproducing section 108, where the information can be dubbed.

It should be added that image information and audio information stored in the HDD 110 are not only used for dubbing information as mentioned above but also for image display and audio output by applying format conversion to the information through the format conversion circuit 111 and subsequently supplying it to the monitor 220 via the interface circuit 112. Still more, when dubbing is carried out in the digital recording and reproducing section 106, the analog recording and reproducing section 107 or the memory card recording and reproducing section 108, it is possible to reproducing image information and audio information recorded in respective recording media, subjected to format conversion through the format conversion circuit 111, and subsequently supplied to the monitor 220 via the interface circuit 112. This procedure enables the user to confirm whether or not the information is properly recorded in the recording media.

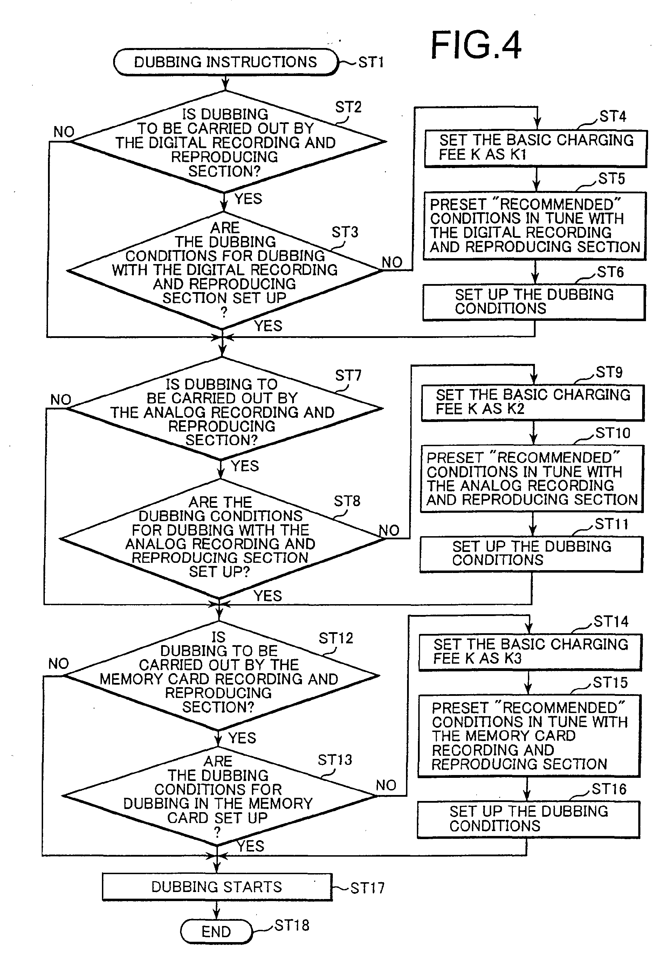

Next, in the information recording and reproducing apparatus 100 shown in Fig. 1, processing in the control unit 101 when dubbing is instructed by user's operation of the operation section 102 will be described with reference to the flowchart of Fig. 4. It has to be noticed that prior to dubbing instructions, the supplier of information to be dubbed and the recording and reproducing section to carry out dubbing are set up. The dubbing conditions may also be set up prior to issuing dubbing instructions.

When dubbing instructions are issued in step ST 1, it is determined in step ST 2 whether or not dubbing is to be carried out by the digital recording and reproducing section 106. If dubbing is to be carried out by the digital recording and reproducing section 106, process goes on to step ST 3. On the other hand, if no dubbing is to be carried out by the digital recording and reproducing section 106, process goes on to step ST 7. In step ST 3, it is determined whether or not the dubbing conditions for dubbing in the digital recording and reproducing section 106 have been set up. If the dubbing conditions are already set up, since there is no need of newly setting up the dubbing conditions, process goes on to step ST 7. On the other hand, if the dubbing conditions have not been set up yet, process goes on to step ST 4 to set up the dubbing conditions.

In step ST 4, the basic charging fee K is set up as K1, and in step ST 5, preset the "recommended" dubbing conditions in tune with the digital recording and reproducing section 106. In step ST 6, process to set up the dubbing conditions, then process goes on to step ST 7.

In step ST 7, it is determined whether or not dubbing is to be carried out by the analog recording and reproducing section 107. If dubbing is to be carried out by the analog recording and reproducing section 107, process goes on to step ST 8. On the other hand, if dubbing is not to be carried out by the analog recording and reproducing section 107, process goes on to step ST 12. In step ST 8, it is determined whether or not the dubbing conditions have been set up. If the dubbing conditions have been set up, since there is no need of newly setting up the dubbing conditions, process goes on to step ST 12. On the other hand, if the dubbing conditions have not been set up yet, process goes on to step ST 9 to set up the dubbing conditions.

In step ST 9, the basic charging fee K is set up as K2, and in step ST 10, preset the "recommended" dubbing conditions in tune with the analog recording and reproducing section 107. In step ST 11, process to set up the dubbing conditions, then process goes on to step ST 12.

In step ST 12, it is determined whether or not dubbing is to be carried out by the memory card recording and reproducing section 108. If dubbing is to be carried out by the memory card recording and reproducing section 108, process goes on to step ST 13. On the other hand, if no dubbing is to be carried out by the memory card recording and reproducing section 108, process goes on to step ST 17. It is determined in step ST 13 whether or not the dubbing conditions to be dubbed by the memory card recording and reproducing section 108 have been set up. If the dubbing conditions are already set up, since there is no need of newly setting up the dubbing conditions, process goes on to step ST 17. On the other hand, if the dubbing conditions have not been set up yet, process goes on to step ST 14 to set up the dubbing conditions.

In step S14, the basic charging fee is set up as K3, and in step ST 15, preset the "recommended" dubbing conditions in tune with the memory card recording and reproducing section 108. In step ST 16, process to set up the dubbing conditions, and then process goes on to step ST 17.

In step ST 17, the dubbing is started. Namely, it starts by dubbing information from the supplier in the recording medium at the recording and reproducing section carrying out recording in tune with the set dubbing conditions. In step ST 18, the processing is completed.

In this manner, when recording instructions are received, it is determined whether or not to carry out recording with any of the digital recording and reproducing section 106, the analog card recording and reproducing section 107, and the memory card recording and reproducing section 108. If the dubbing conditions have not been preset, the dubbing conditions are set up in relation to the recording and reproducing section carrying out recording, then recording is started. The setting up carried out prior to the issuance of the recording instructions is the same as that of the dubbing conditions after the recording instructions have been received.

It has to be noticed that the basic charging fee K is set up as K1 when recording with the digital recording and reproducing section 106, set up as K2 when recording with the analog recording and reproducing section 107, and set up as K3 when recording with the memory card recording and reproducing section 108. It should also be noted that, for example, the highest setting is made for K1, the K3 setting being slightly higher than the K2 setting.

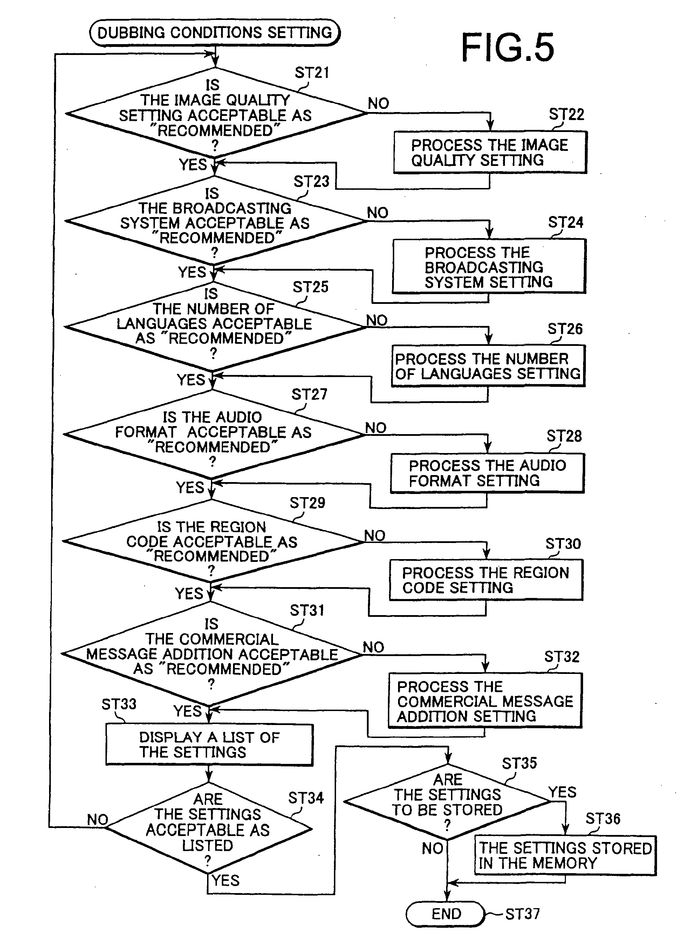

Next, processing to set up the dubbing conditions in steps ST 6, ST 11, and ST 16 will be described with reference to the flowchart in Fig. 5.

First, in step ST 21, when the processing to set up the dubbing conditions starts, confirmation is made in step ST 22 with the user as to whether or not the image quality setting is acceptable as "recommended." In this case, a message to that effect is shown on the display section 103. It has to be noticed that the "recommended" conditions are shown on the display section 103, too. If the user operates "NO," process goes on to step ST 22. On the other hand, if the user operates "YES," process goes on to step ST 23. In step ST 22, the image quality setting is processed. Then, process goes on to step ST 23.

In step ST 23, confirmation is made with the user as to whether or not the broadcasting system is acceptable as "recommended." In this case, a message to that effect is shown on the display section 103. If the user operates "NO," process goes on to step ST 24. On the other hand, if the user operates "YES," process goes on to step ST 25. In step ST 24, the broadcasting system setting is processed. Then, process goes on to step ST 25.

In step ST 25, confirmation is made with the user as to whether or not the number of languages is acceptable as "recommended." In this case, a message to that effect is shown on the display section 103. If the user operates "NO," process goes on to step ST 26. On the other hand, if the user operates "YES," process goes on to step ST 27. In step ST 26, the setting of the number of languages is processed. Then, process goes on to step ST 27.

In step ST 27, confirmation is made with the user as to whether or not the audio format is acceptable as "recommended." In this case, a message to that effect is shown on the display section 103. If the user operates "NO," process goes on to step ST 28. On the other hand, if the user operates "YES," process goes on to step ST 29. In step ST 28, the setting of the audio format is processed. Then, process goes on to step ST 29.

In step ST 29, confirmation is made with the user as to whether or not the Region Code is acceptable as "recommended." In this case, a message to that effect is shown on the display section 103. If the user operates "NO," process goes on to step ST 30. On the other hand, if the user operates "YES," process goes on to step ST 31. In step ST 30, the Region Code setting is processed. Then, process goes on to step ST 31.

In step ST 31, confirmation is made with the user as to whether or not the addition of a commercial message is acceptable as "recommended." In this case, a message to that effect is shown on the display section 103. If the user operates "NO," process goes on to step ST 32. On the other hand, if the user operates "YES," process goes on to step ST 33. In step ST 32, the setting of a addition of commercial message is processed. Then, process goes on to step ST 33.

In step ST 33, the settings of the dubbing conditions set in the above-mentioned steps ST 21-ST 32 are displayed in a list on the display section 103. And in step ST 34, confirmation is made with the user as to whether or not the settings are acceptable as shown in the list. In this case, a message to that effect is shown on the display section 103. If the user operates "NO," return to step ST 21, repeat the above-mentioned processing, and redo the settings.

On the other hand, if the user operates "YES," confirmation is made in step ST 35 with the user as to whether or not the settings are to be stored. If the user operates "NO," in step ST 37, the processing is completed. On the other hand, if the user operates "YES," in step ST 36, the settings of the dubbing conditions are recorded in the IC card 116, then, in step ST 37, the processing is completed. As the settings of the dubbing conditions are stored in the IC card 116, the dubbing conditions thus set can be presented the next time in lieu of the "recommended" conditions. It has to be noticed that when setting up the dubbing conditions, by operating the operation section 102, the user can set whether to let the display section 103 show the "recommended" conditions or the conditions stored in the IC card 116.

In this manner, when setting the dubbing conditions, the user can make settings of the image quality, the broadcasting system, the number of languages, the audio format, the Region Code as well as the setting of the addition of commercial message.

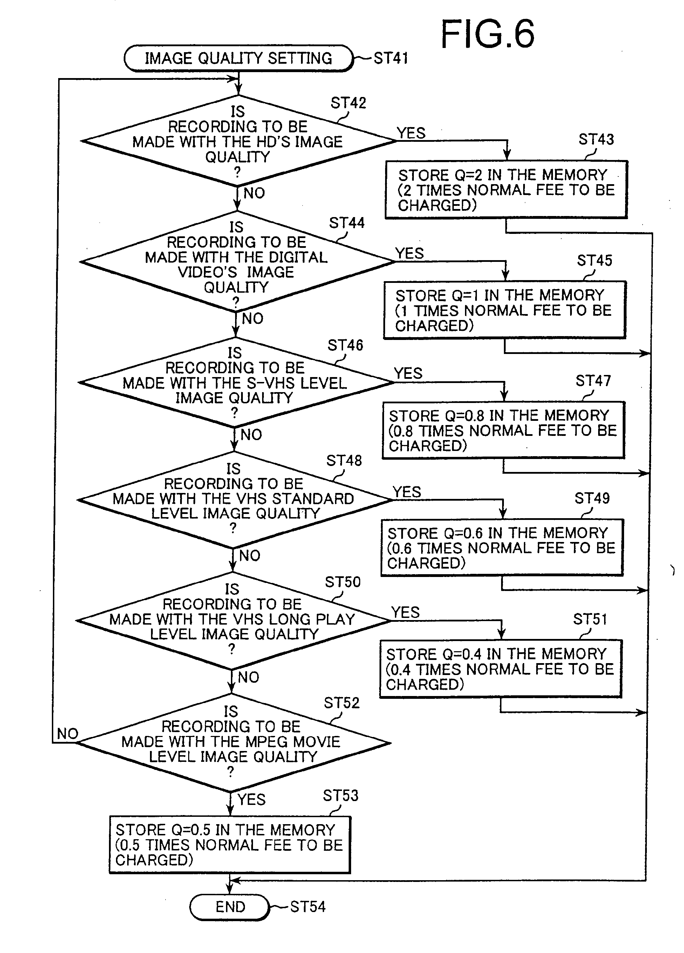

Next, the processing of the image quality setting in step ST 22 will be described with reference to the flowchart in Fig. 6.

First, in step ST 41, when the processing of the image quality setting is started, confirmation is made in step ST 42 with the user as to whether or not recording is to be made with the HD's image quality. In this case, a message to that effect is shown on the display section 103. If the user operates "NO," process goes on to step ST 44. On the other hand, if the user operates "YES," in step ST 43, set the charge multiplying factor Q based on the image quality stored in the RAM built in the control section 101 as 2, process goes on to step ST 54, and then the processing is completed.

In step ST 44, confirmation is made with the user as to whether or not recording is to be made with the digital video's image quality. In this case, a message to that effect is shown on the display section 103. If the user operates "NO," process goes on to step ST 46. On the other hand, if the user operates "YES," in step ST 45, set the charge multiplying factor Q stored in the RAM as 1, process goes on to step ST 54, and then the processing is completed.

In step ST 46, confirmation is made with the user as to whether or not recording is to be made with the image quality on the S-VHS (Super-VHS) level. In this case, a message to that effect is shown on the display section 103. If the user operates "NO," process goes on to step ST 48. On the other hand, if the user operates "YES," in step ST 47, set the charge multiplying factor Q stored in the RAM as 0.8, process goes on to step ST 54, and then the processing is completed.

In step ST 48, confirmation is made with the user as to whether or not recording is to be made with the image quality on the VHS standard level. In this case, a message to that effect is shown on the display section 103. If the user operates "NO," process goes on to step ST 50. On the other hand, if the user operates "YES," in step ST 49, set the charge multiplying factor Q stored in the RAM as 0.6, process goes on to step ST 54, and then the processing is completed.

In step ST 50, confirmation is made with the user as to whether or not recording is to be made with the image quality on the VHS long play level. In this case, a message to that effect is shown on the display section 103. If the user operates "NO," process goes on to step ST 52. On the other hand, if the user operates "YES," in step ST 51, set the charge multiplying factor Q stored in the RAM as 0.4, process goes on to step ST 54, and then the processing is completed.

Also, in step ST 52, confirmation is made with the user as to whether or not recording is to be made with the image quality on the MPEG movie level. If the user operates "NO," return to step ST 42. On the other hand, if the user operates "YES," in step ST 53, set the charge multiplying factor Q stored in the RAM as 0.5, process goes on to step ST 54, and then the processing is completed.

In this manner, when setting the image quality, the user can select any image quality from the HD's image quality, the digital video's image quality, the S-VHS level image quality, the VHS standard level image quality, the VHS long play level image quality, and the MPEG movie level image quality. In this case, depending on the image quality selected, the charge multiplying factor Q changes. It should be added that the selectable image qualities do not need to include all of these qualities but may include other qualities than these as well.

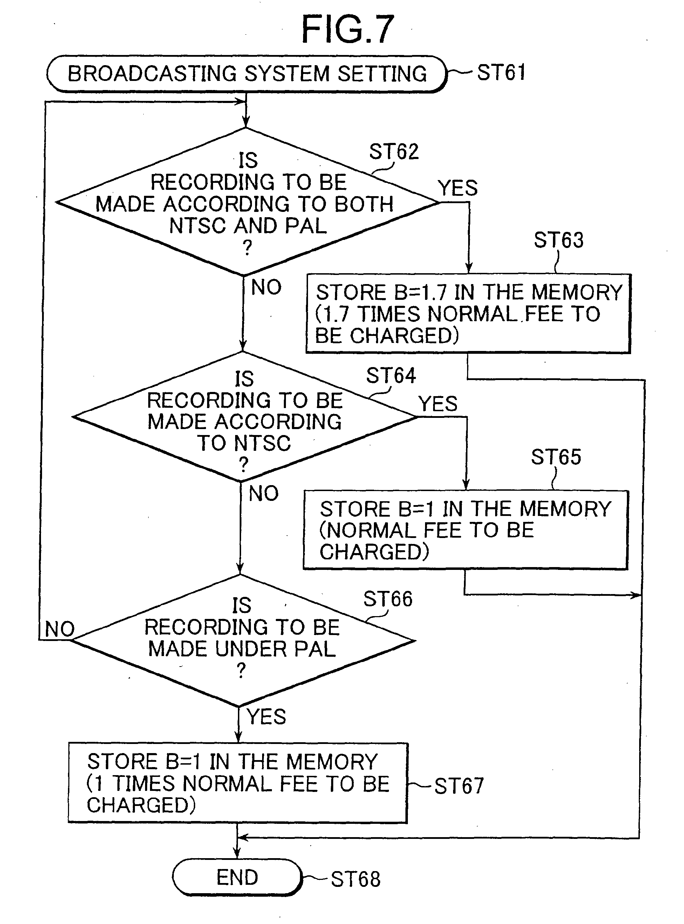

Next, the processing of the broadcasting system setting in step ST 24 will be described with reference to the flowchart in Fig. 7.

First, in step ST 61, when the processing of the broadcasting system setting is started, confirmation is made in step ST 62 with the user as to whether or not recording is to be made according to both the NTSC and the PAL. In this case, a message to that effect is shown on the display section 103. If the user operates "NO," process goes on to step ST 64. On the other hand, if the user operates "YES," in step ST 63, set the charge multiplying factor B based on the broadcasting system stored in the RAM built in the control unit 101 as 1.7, process goes on to step ST 68, and then the processing is completed.

In step ST 64, confirmation is made with the user as to whether or not recording is to be made according to the NTSC. In this case, a message to that effect is shown on the display section 103. If the user operates "NO," process goes on to step ST 66. On the other hand, if the user operates "YES," in step ST 65, set the charge multiplying factor B stored in the RAM as 1, process goes on to step ST 68, and then the processing is completed.

In step ST 66, confirmation is made with the user as to whether or not recording is to be made according to the PAL. In this case, a message to that effect is shown on the display section 103. If the user operates "NO," return to step ST 62. On the other hand, if the user operates "YES," in step ST 67, set the charge multiplying factor B stored in the RAM as 1, process goes on to step ST 68, and then the processing is completed.

In this manner, when setting the broadcasting system, the user can select any broadcasting system from the NTSC and the PAL, the NTSC, and the PAL. In this case, depending on the broadcasting system selected, the charge multiplying factor B changes. It should be added that the selectable broadcasting systems do not need to include all of these systems but may include other systems than these as well.

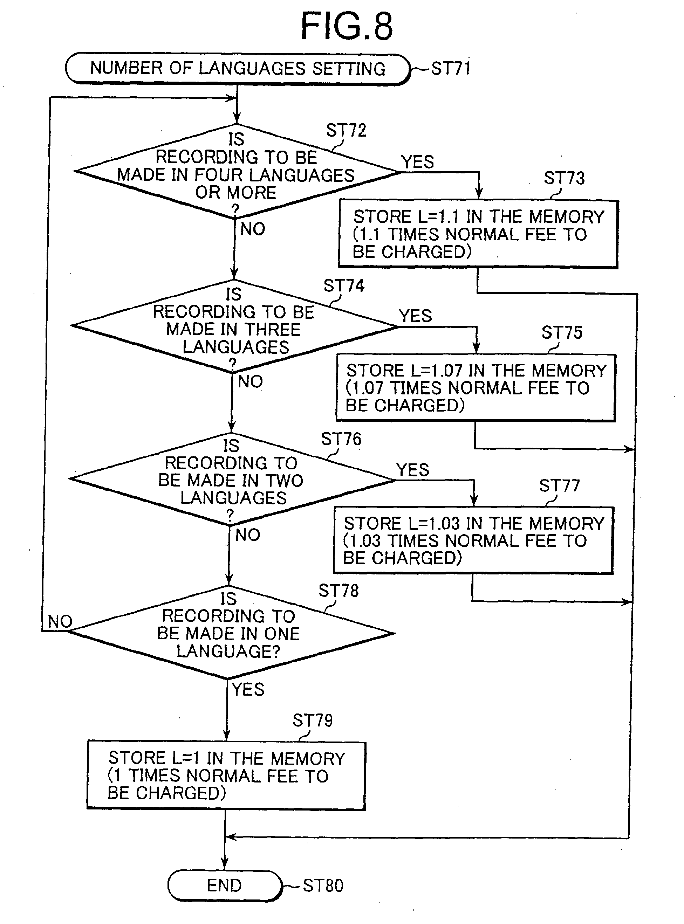

Next, the processing for setting the number of languages in step ST 26 will be described with reference to the flowchart in Fig. 8.

First, in step ST 71, when the processing for setting the number of languages is started, confirmation is made in step ST 72 with the user as to whether or not recording is to be made in four languages or more. In this case, a message to that effect is shown on the display section 103. If the user operates "NO," process goes on to step ST 74. On the other hand, if the user operates "YES," in step ST 73, set the charge multiplying factor L based on the number of languages stored in the RAM built in the control unit 101 as 1.1, process goes on to step ST 80, and then the processing is completed.

In step ST 74, confirmation is made with the user as to whether or not recording is to be made with three languages. In this case, a message to that effect is shown on the display section 103. If the user operates "NO," process goes on to step ST 76. On the other hand, if the user operates "YES," in step ST 75, set the charge multiplying factor L stored in the RAM as 1.07, process goes on to step ST 80, and then the processing is completed.

In step ST 76, confirmation is made with the user as to whether or not recording is to be made with two languages. In this case, a message to that effect is shown on the display section 103. If the user operates "NO," process goes on to step ST 78. On the other hand, if the user operates "YES," in step ST 77, set the charge multiplying factor L stored in the RAM as 1.03, process goes on to step ST 80, and then the processing is completed.

In step ST 78, confirmation is made with the user as to whether or not recording is to be made with one language. In this case, a message to that effect is shown on the display section 103. If the user operates "NO," return to step ST 72. On the other hand, if the user operates "YES," in step ST 79, set the charge multiplying factor L stored in the RAM as 1, process goes on to step ST 80, and then the processing is completed.

In this manner, when setting the number of languages, the user can select any number of languages from four languages or more, three languages, two languages, and one language. In this case, depending on the number of languages selected, the charge multiplying factor L changes. It should be added that the selectable number of languages does not need to include all of these languages but may include other languages than these as well.

It should be noted that in analog recording, only one language or two languages can be recorded, so that when dubbing with the analog recording and reproducing section 107, step ST 72 and step ST 74 in the flowchart in Fig. 8 are omitted. Also, since only one language can be recorded on the memory card 109, when dubbing with the memory card recording and reproducing section 108, step ST 25 and step 27 in the flowchart in Fig. 5 are omitted.

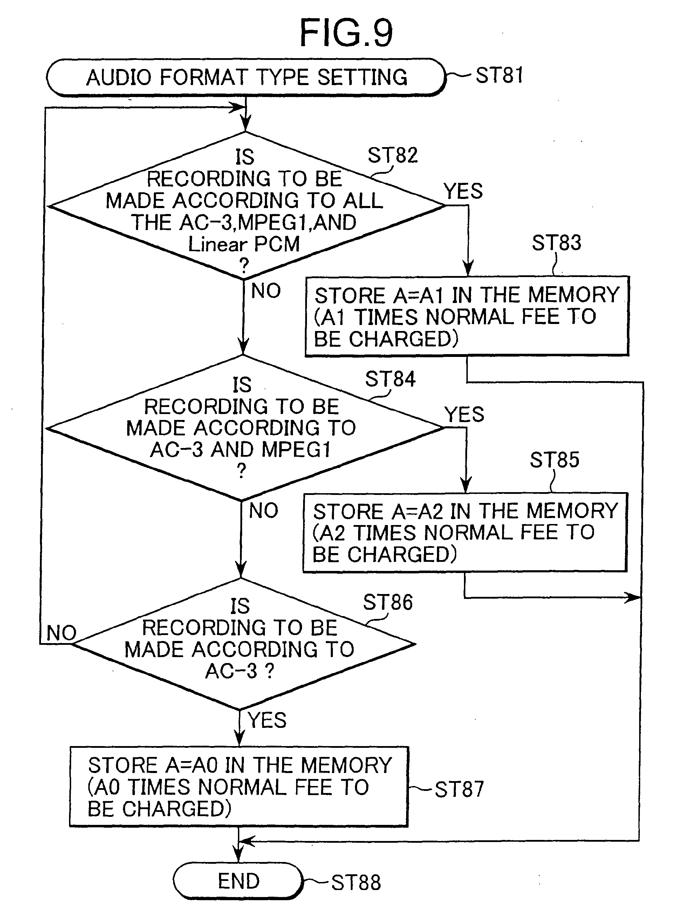

Next, the processing of the audio format setting in step ST 28 in Fig. 5 will be described with reference to the flowchart in Fig. 9.

First, in step ST 81, when the processing of the audio format setting is started, confirmation is made in step ST 82 with the user as to whether or not recording is to be made according to all the AC-3, the MPEG1, and the linear PCM. In this case, a message to that effect is shown on the display section 103. If the user operates "NO," process goes on to step ST 84. On the other hand, if the user operates "YES," in step ST 83, set the charge multiplying factor A based on the audio formats stored in the RAM built in the control unit 101 as A1, process goes on to step ST 88, and then the processing is completed.

In step ST 84, confirmation is made with the user as to whether or not recording is to be made according to the AC-3 and the MPEG1. In this case, a message to that effect is shown on the display section 103. If the user operates "NO," process goes on to step ST 86. On the other hand, if the user operates "YES," in step ST 85, set the charge multiplying factor A stored in the RAM as A2, process goes on to step ST 88, and then the processing is completed.

In step ST 86, confirmation is made with the user as to whether or not recording is to be made according to the AC-3. In this case, a message to that effect is shown on the display section 103. If the user operates "NO," return to step ST 82. On the other hand, if the user operates "YES," in step ST 87, set the charge multiplying factor A stored in the RAM as A0, process goes on to step ST 88, and then the processing is completed.

In this manner, when setting the audio format, the user can select any number of audio formats according to the AC-3, the MPEG1, and the linear CM. In this case, depending on the audio format selected, the charge multiplying factor A changes. It should be added that the selectable audio formats do not need to include all of these types but may include other types than these as well.

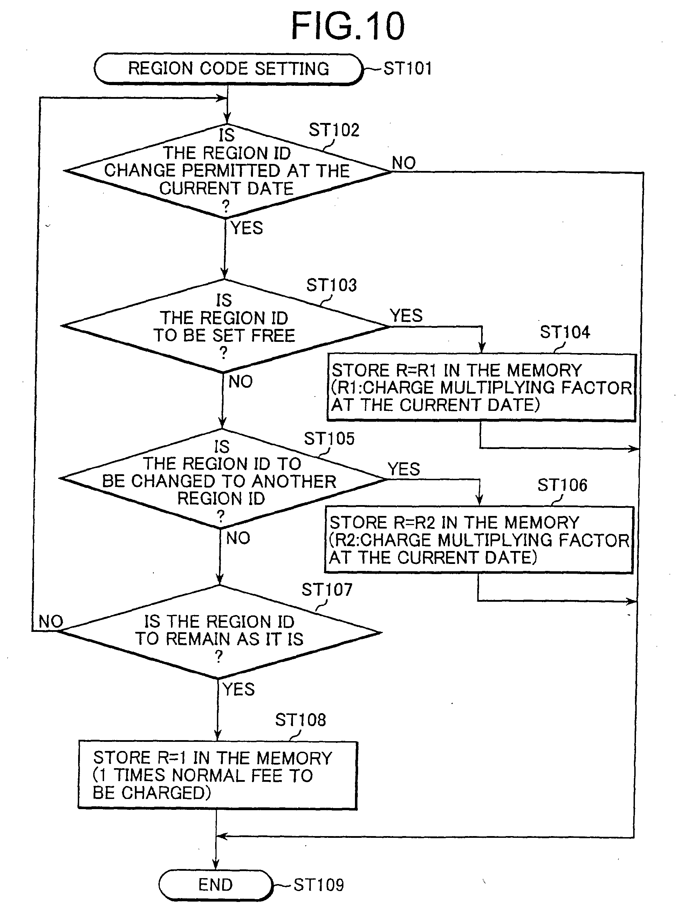

Next, the processing for setting the Region Code in step ST 30 in Fig. 2 will be described with reference to the flowchart in Fig. 10. It has to be noted that the step ST 30 is effective when dubbing with the digital recording and reproducing section 106, and that when dubbing with the analog recording and reproducing section 107 and when dubbing with the memory card recording and reproducing section 108, it is omitted. Also, the step ST 30 is effective when the supplier of the information to be dubbed is the digital recording section (DVD recording section) 105, and omitted when the supplier of the information to be recorded is the satellite tuner 104.

It is known that the Region Code refers to the copyright protection system in regard to the DVD-Video standard, a method whereby reproducing is controlled in terms of six regions of the world. The reproducing region ID (Region ID) is set up for the reproducing devices and disks for each area to control reproducing. In this case, a system of permitting changes in the Region ID on the assumption of payment of compensation such as charging has been created, whereas in the event of detecting an ID permitting a change in the Region ID, charging is made so that the Region ID is set free or a change to another Region ID can be made.

Referring to the flowchart in Fig. 10, first, in step ST 101, when the processing for setting the Region Code is started, it is determined in step ST 102 whether or not a change of the Region ID is authorized at the current date. If the ID permitting the Region ID change at the current date is detected from the reproducing data of a DVD disk played back in the digital reproducing section 105, it is determined that the change has been authorized. If the Region ID change has been authorized, process goes on to step ST 103. On the other hand, if the Region ID change has not been authorized, process goes on to step ST 109, and then the processing is completed.

In step ST 103, confirmation is made with the user as to whether or not the Region ID is to be set free. In this case, a message to that effect is shown on the display section 103. On the display section 103 is shown the reproducing area effective for the current Region ID. If the user operates "NO," process goes on to step ST 105. On the other hand, if the user operates "YES," in step ST 105, set the charge multiplying factor R based on the Region code stored in a RAM built in the control unit 101 as R1, then process goes on to step ST 109, and the processing is completed. In this case, R1 stands for the charge multiplying factor at the current date. Information on the charge multiplying factor R1 at the current date is, for example, extracted from the reproducing data of the DVD disk played back in the digital reproducing section 105. The same applies to the charge multiplying factor R2 to be explained later.

In step ST 105, confirmation is made with the user as to whether or not the current Region ID is to be changed to another Region ID. In this case, a message to that effect is shown on the display section 103. On the display 103 is shown the reproducing area(s) effective for the current Region ID as well as the changeable Region ID. If the user operates "NO," process goes on to step ST 107. On the other hand, if the user operates "YES," in step ST 106, set the charge multiplying factor R stored in the RAM as R2 (R1>R2), then process goes on to step ST 109, and the processing is completed. In this case, R2 stands for the charge multiplying factor at the current date. It has to be noticed that if the user operates "YES," although not illustrated in Fig. 10, prior to step ST 106, a step of letting the user select a new Region ID is processed.

In step ST 107, confirmation is made with the user as to whether or not the current Region ID is to remain as is. In this case, a message to that effect is shown on the display section 103. On the display section 103 is shown the reproducing area effective for the current Region ID. If the user operates "NO," return to step ST 107. On the other hand, if the user operates "YES," in step ST 108, set the charge multiplying factor R stored in the RAM as 1 (R1>R2), process goes on to step ST 109, and then the processing is completed.

In this manner, when the Region ID change is authorized at the Region Code setting at the current date, the user can set the Region ID free or change to another Region ID.

The Region ID change is hereby authorized, and also when changing the Region ID upon receipt of authorization, charging is made at the charge multiplying factor corresponding to the current date. Hence, for example, in the case of a movie, it is possible to stipulate that "No Region ID change is authorized up to six months or earlier after the release," or "A Region ID change may be authorized during a period from seven months up to and including 12 months after the release, but the charge multiplying factor will be set a little higher." Since these time elements and the charge multiplying factor are set up according to a value of the software, it is considered that a system that is mutually agreeable to both concerning parties, namely the copyright holder and the user, can be established. It must be added that the authorization and the charging with time limits are naturally applicable not only to the above-mentioned Region ID change but also wider to a variety of other fields including recording authorization and charging.

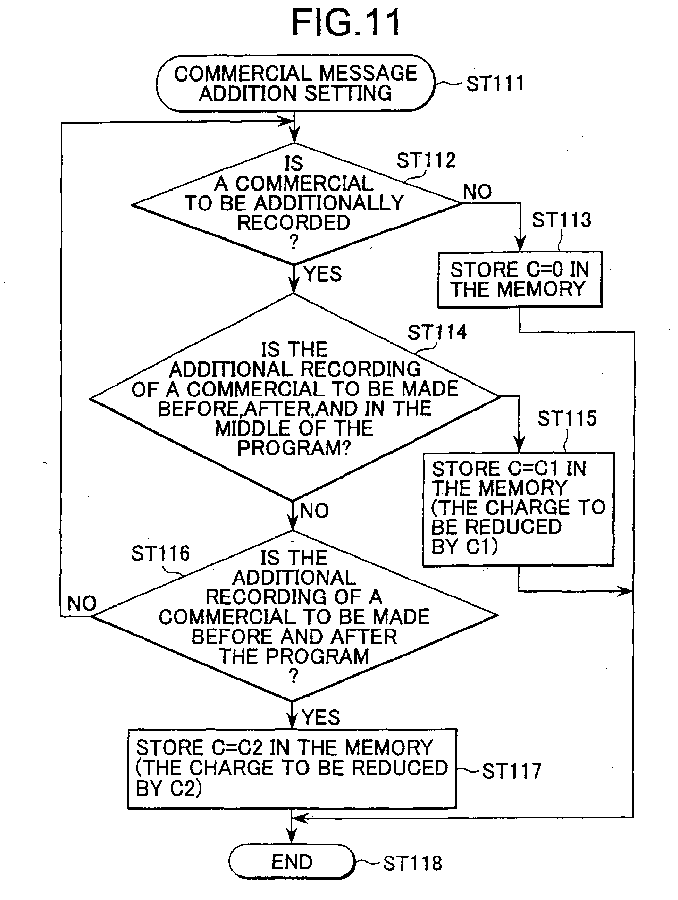

Next, the processing for setting addition of a commercial message in step ST 32 in Fig. 5 will be described with reference to the flowchart in Fig. 11.

First, in step ST 111, when the processing for setting addition of a commercial message is started, confirmation is made in step ST 112 with the user as to whether or not a commercial message is to be additionally recorded. In this case, a message to that effect is shown on the display section 103. If the user operates "YES," process goes on to step ST 114. On the other hand, if the user operates "NO," in step ST 113, set the reduced fee C based on the addition stored in the RAM built in the control unit 101 as 0, process goes on to step ST 118, and then the processing is completed.

In step ST 114, confirmation is made with the user as to whether or not a commercial message is to be additionally recorded preceding and succeeding as well as in the middle of the program. In this case, a message to that effect is shown on the display section 103. If the user operates "NO," process goes on to step ST 116. On the other hand, if the user operates "YES," in step ST 115, set the reduced fee C stored in the RAM as C1, process goes on to step ST 118, and then the processing is completed

In step ST 116, confirmation is made with the user as to whether or not a commercial message is to be additionally recorded preceding and succeeding the program. In this case, a message to that effect is shown on the display section 103. If the user operates "NO," return to step ST 112. On the other hand, if the user operates "YES," in step ST 117, set the reduced fee C stored in the RAM as C2 (C2<C1), process goes on to step ST 118, and then the processing is completed

In this manner, in the additional commercial message settings, the user can select whether or not a commercial message is to be additionally recorded, and if additional recording is to be made, which section of the program is to be subjected to the additional recording. And, in this case, the greater the information on the commercial message to be additionally recorded, the larger the reduced fee in charging.

It is it has to be noticed that a section assigned for additional recording of the commercial message may be not only before and after the program, before, after, and during the program but also only prior to the program or only after the program. Also, in the case of digital information, a section appearing in an image scene, for example, the contents of a billboard, can be rewritten into the name of a sponsor, so that information on the commercial message may be added there.

Further, information on the commercial message may be added after selecting in terms of the user's attribute information recorded in the IC card 116, that is, age, sex, field of interest and other information. Arrangements in this manner will contribute to providing information on the commercial message effective for both the user and the sponsor.

As mentioned above, in the preferred embodiment of the present invention, the basic charging fee K is set up in tune with the recording and reproducing section carrying out dubbing, the charge multiplying factor and the reduced fee being set up according to the dubbing conditions such as the image quality, the broadcasting system, the number of languages, the audio format, the Region code, and the addition of commercial message.

Now, the dubbing conditions need not to be restricted to those mentioned above. For example, the DVD-Video has functions of a "multi-angle" which enables a single scene to be seen from various angles and a "multi-story" which enables the spectator to enjoy various stories, whereas these functions may be specified at the event of dubbing and the charging may be made accordingly.

Moreover, the DVD-Video is provided with a disk for the "parental lock" function to impose a restriction on the spectator's age, whereby, unless the pre-registered password number is inputted, normal reproducing cannot be performed, thus enabling violent scenes and other scenes that are not desirable from the educational standpoint, to be automatically skipped or to be changed to separate pre-recorded scenes in the disk which are then played back. This operation may be specified at the event of dubbing and the charges may be made accordingly.

Further, several languages can be selected for superimposition, the so-called superimposed characters in the movie scenes, and one language may be selected and specified at the event of dubbing with appropriate charges accordingly. Likewise, at the event of dubbing, information controlling data such as meta data, that is, data attributes, meaning, contents, origin and storage location, may be added or changed.

In any event, with regards to dubbing from a recording medium containing a variety of information such as the DVD to other recording media, dubbing carried out by selecting and restricting the conditions results in effectively using the limited storage capacity of other recording media. Also, that would mean fixing the conditions of the "parental lock" function, leading to a possibility that violent scenes may be seen by manipulating the original recording medium, but because the recording medium resulting from dubbing does not contain such information violent scenes, there is a beneficial effect whereby parents can feel relieved and provide the software to their children. Namely, the intent of the person who is dubbing can be reflected in the dubbing result. Further, since charging is made variable depending on the dubbing conditions, the size of the information can be reflected on the charges. Still further, since there is no need to pay for unnecessary information, this is a reasonable innovative step.

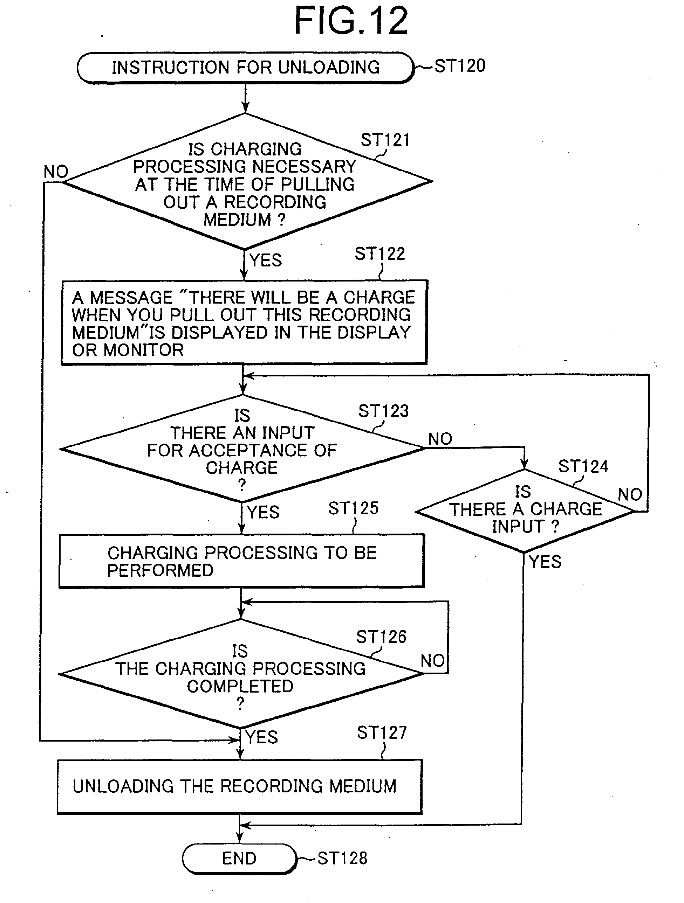

Next, when instructions are issued by the user's operation of the operation section 102 in the information recording and reproducing apparatus 100 to eject (output) the recording medium from any of the digital recording and reproducing section 106, the analog recording and reproducing section 107, and the memory card recording and reproducing section 108, the processing of the control unit 101 will be described with reference to the flowchart in Fig. 12.

Upon receipt of instructions for unloading in step ST 120, it is determined in step ST 121 whether or not charging processing is necessary to pull out (or, unload, etc.) the recording medium. Namely, if any new recording is performed during a period of time from the attachment of the recording medium until it is taken out, confirmation is made as to whether or not the process of recording requires charging. It is pointed out that when information is received by the satellite tuner 104, or when information played back by the digital reproducing section 105 is recorded directly or via the HDD 110, the information itself being the one requiring no charges, no charging processing is required.

When charging processing is not necessary, the recording medium is unloaded in step ST 127, and then the processing is completed. On the other hand, when charging processing is necessary, a message such as " There will be a charge when you pull out this recording medium" appears on the display section 103 or the monitor 220 for the user to confirm that it is subject to charge. It has to be noticed that instead of notifying by display, audio may be also used in this manner for notification.

Next, in step ST 123, it is determined whether or not an input for acceptance of charge n has been received. When there is no charge acceptance input, it is determined in step ST 124 whether or not a charge NG input has been received. When there is no charge NG input, processing returns to step ST 123. When there is a charge NG input in step ST 124, process goes on to step ST 128, and the processing is completed without unloading the recording medium.

When there is charge acceptance input in step ST 123, process goes on to step ST 125 and charge the basic charging fee for the above-mentioned recording and reproducing section carrying out dubbing, the amount calculated by the charge multiplying factor, and the reduced fee according to the dubbing conditions.

Charging processing is performed by the fee charging section 113. The fee charging section 113, for example, stores charging information in the IC card 116. Subsequently, the charging information is transmitted via the communication network 300 such as the Internet and the telephone circuit to the authentication/charging agency. Also, for example, the fee charging section 113 continues charging until the prepaid amount of the IC card 116 having a prepaid card function is exhausted.

Then, in step ST 126, it is determined whether or not the charging processing has been completed. Upon completion of the charging processing, the recording medium is unloaded in step ST 127 and the processing is completed in step ST 128. It has to be noticed that when the charging is made by providing the IC card 116 with the prepaid card function as mentioned above, if there is no sufficient money left at the time of unloading, it may be so arranged that no unloading (ejection) of the recording medium is performed, but a message to that effect is shown on the display section 103 or the monitor 220 to notify the user.

As mentioned above, charging is made when the recording medium is unloaded, thus making it possible to charge reasonably. Namely, although the number of persons who can use the image information and audio information recorded, for example, in the HDD 110 of the information recording and reproducing apparatus 100, are limited, once the information is recorded in the recording medium to be subsequently unloaded, the recording medium can be easily carried around to be used by a large number of people, thus enhancing its usefulness. Therefore, the charging made when the recording medium containing the recorded information is unloaded is regarded as proper compensation for the usefulness. Further, as far as the method of charging when the recording medium containing the recorded information is unloaded is concerned, the charging can be made for the number of pieces of the recording medium containing the recorded information. Moreover, the user can confirm prior to charging whether or not recording has been correctly carried out in the recording medium.

Although charging in the above mentioned preferred embodiment is made upon unload (ejection) of the recording medium containing the recorded information, there is a case, as mentioned above, where information received by the satellite tuner 104 or information played back by the digital reproducing section 105 is once stored in the HDD 110 then recorded in a predetermined recording medium, the recording medium being unloaded to be used, whereas, even if the information is in the state of storage in the HDD 110, images and audio can be reproduced, so that charging may be made upon storing the information in the HDD 110 in this manner and further charging may be performed when the information is recorded into the predetermined recording medium and unloaded.

Moreover, although not mentioned above, to prevent further dubbing from the recording medium wherein the information was dubbed, at the event of dubbing, it may be so arranged that the ID limiting the dubbing generation or the no dubbing authorized ID is simultaneously recorded. In addition, the charging amount may be changed depending on conditions such as free dubbing or dubbing up to a second generation.

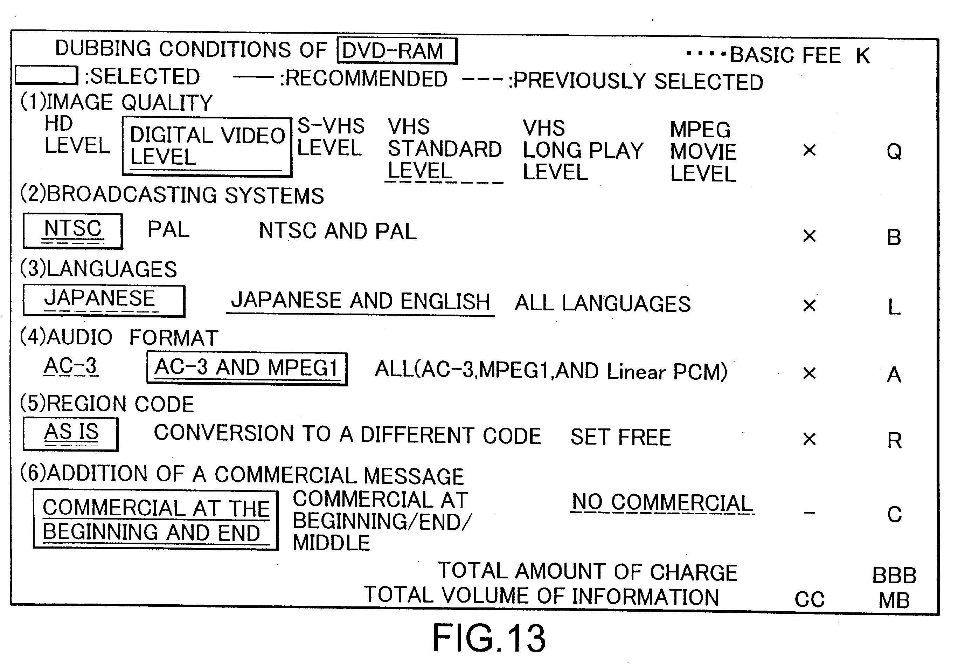

Also, in the above-mentioned preferred embodiment of the present invention, when setting the dubbing conditions, the image quality, the broadcasting system , the number of languages, the audio format, the Region Code and the addition of commercial message are described so as to be sequentially done. However, other variations are possible as well. For example, as shown in Fig. 13, a list of the set items may be shown on the screen of the monitor 220 for the user to refer thereto and selection may be done only for desired portions. For example, in the list shown in Fig. 13, the portions of each set items are enclosed in solid line frames, the "recommended" portions are underlined, and the previously selected portions are underlined by broken lines. In lieu of the previously selected portions, those with a high selection frequency may be underlined with broken lines. In addition, these distinctions may be executed by using ornamental letters, accentuation, or letters in color.

In the list there is clearly shown to be seen at a glance that the basic charging fee K is multiplied by the charge multiplying factor Q, B, L, A, and R, the reduced fee C being subtracted therefrom to obtain the total fee BBB. Another way may be expressed by showing the amount to be added in lieu of the charge multiplying factor Q, B, L, A, and R, which is then added to the basic fee K. Also, as shown in Fig. 13, the total volume of information CC to be recorded may be presented.

Although not mentioned above, the conditions corresponding to the recording capacity of the recording medium to be dubbed may be presented as "Recommended." This would enable the information to be recorded under the optimum condition corresponding to the recording capacity thereof.

Further, in the above-mentioned preferred embodiment, image information and audio information were primarily described as the information to be recorded in the recording media. Nevertheless, the information according to embodiments of the present invention is not limited to the image information and the audio information but includes all and every information such as information used in the computer apparatus and equipment, regardless of digital information and analog information.

Still further, in the above-mentioned preferred embodiment, there is shown an apparatus provided with one each of the satellite tuner 104, the digital reproducing section 106, the analog reproducing section 107, the memory card reproducing section 108, and the HDD 110. A plurality of respective sections may be provided as well. Furthermore, some sections may be omitted as necessary.

Moreover, in the above-mentioned embodiment, there is shown the satellite tuner 104 as the receiver receiving transmitted information. Embodiments of the present invention are not limited thereto, and cable TV receivers, the Internet, and broadband receivers are also acceptable.

Embodiments of the present invention charge a fee when the recording medium containing recorded information is unloaded, thereby charging can be done in a reasonable manner. Namely, it is possible to charge for the convenience of unloading the recording medium containing recorded information and reproducing or storing it in other devices. Also, the charge can be applied whenever dubbing is carried out repeatedly in a plurality of recording media. In addition, for example, when dubbing fails as the signals are cut off during recording process, dubbing can start all over again from the beginning. Moreover, it is possible to operate the information recording and reproducing apparatus according to embodiments of the present invention in such a way that the dubbing contents are played back without unloading the recording medium from the apparatus so as to make sure of the proper dubbing result, and that, if the result is acceptable, then the recording medium is unloaded.

Although embodiments of the invention have been described in a preferred form with a certain degree of particularity, obviously many changes, variations and combinations are possible therein. It is therefore to be understood that any modifications will be practiced otherwise than as specifically described herein without departing from the scope of the present invention. Also, although description of the preferred embodiments herein is made by reference to (fee) charging operation performed upon unloading the recording medium from the information recording and reproducing apparatus, it is to be understood to those skilled in the art that "unloading" shall include an operation of removing a recording medium from a recording position, so that "unloading" may include ejecting, removing, taking/pulling/pushing out/off, uninstalling or the like of the recording medium from a recording position.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An information recording apparatus comprising:
information recording means for recording information in a first recording medium;
operating means for operating unloading of said first recording medium including said information recorded by said information recording means;
unloading means for unloading said first recording medium based on operation of said operation means; and
fee charging means for charging when said first recording medium is unloaded by said unloading means.

2. The information recording apparatus according to claim 1 further comprising information receiving means for receiving transmitted information; wherein
said information recording means records information received by said information receiving means into said first recording medium.

3. The information recording apparatus according to claim 1 further comprising information storage means for storing information in an information storage; wherein
said information recording means records information stored in said information storage by said information storage means, into said first recording medium.

4. The information recording apparatus according to claim 1 further comprising information reproducing means for reproducing information from a second recording medium; wherein
said information recording means records information reproduced by said information reproducing means into said first recording medium.

5. The information recording apparatus according to claim 1 further comprising notifying means for notifying charging of fee when unloading operation is performed through said operating means.

6. The information recording apparatus according to claim 1 further comprising selecting means for selecting quality of said information to be stored in said first recording medium by said information recording means; wherein
said fee charging means changes the amount of charge according to the quality selected through said selecting means.

7. The information recording apparatus according to claim 6, wherein the quality of said information is based on image quality.

8. The information recording apparatus according to claim 6, wherein the quality of said information is based on broadcasting system.

9. The information recording apparatus according to claim 6, wherein the quality of said information is based on number of languages.

10. The information recording apparatus according to claim 6, wherein the quality of said information is based on audio format.

11. The information recording apparatus according to claim 6, wherein the quality of said information is based on region code.

12. The information recording apparatus according to claim 1 further comprising first selection means for selecting recording of a commercial message along with said information, in said first recording medium; wherein
said fee charging means reduces the amount of charge when recording of said commercial message is selected by said first selection means.

13. The information recording apparatus according to claim 12 further comprising a second selection means for selecting size of said commercial message to be recorded in said first recording medium; wherein
said fee charging means changes the amount of reduction of charge according to the size of said commercial message selected by said second selection means.

14. The information recording apparatus according to claim 1, wherein said fee charging means changes the amount of charge according to type of said first recording medium.

15. A charging method for charging a fee related to an information recording apparatus recording information in a first recording medium and unloading said first recording medium based on an unloading operation, the fee charging method comprising the step of charging when unloading of said first recording medium is performed.

16. The fee charging method according to claim 15, wherein information to be recorded in said first recording medium comprises transmitted information.

17. The fee charging method according to claim 15, wherein information to be recorded in said first recording medium comprises information stored in an information storage.

18. The fee charging method according to claim 15, wherein information to be recorded in said first recording medium comprises information reproduced by a second recording medium.

19. The fee charging method according to claim 15, further comprising the step of notifying charging operation when said unloading operation is performed.

20. The fee charging method according to claim 15, further comprising the step of optionally selecting quality of said information to be recorded in said first recording medium, wherein an amount of charge is changed according to said quality of said information recorded in said first recording medium.

21. The fee charging method according to claim 20, wherein quality of said information is based on quality of image.

22. The fee charging method according to claim 20, wherein quality of said information is based on broadcasting system.

23. The fee charging method according to claim 20, wherein quality of said information is based on number of languages.

24. The fee charging method according to claim 20, wherein quality of said information is based on audio format.

25. The fee charging method according to claim 20, wherein quality of said information is based on region code.

26. The fee charging method according to claim 15, further comprising the step of optionally selecting recording a commercial message together with said information to be recorded in said first recording medium; wherein
an amount of said fee is reduced when said commercial message is recorded together with said information to be recorded in said first recording medium.

27. The fee charging method according to claim 26, further comprising the step of optionally selecting size of said commercial message to be recorded in said first recording medium; wherein
an amount of reduction of fee is changed according to the size of said commercial message recorded in said first recording medium.

28. The fee charging method according to claim 15, further comprising the step of changing an amount of charge according to a type of said first recording medium.

29. An information recording apparatus comprising:
information storage means for storing information in an information storage;
information recording means for recording in a first recording medium information stored in said information storage through said information storage means;
operating means for performing unloading operation of said first recording medium having said information recorded by said information recording means;
unloading means for unloading said first recording medium based on operation of said operating means;
fee charging means for performing:
a first charging when said information is stored in said information storage means through said information storage means; and
a second charging when unloading said first recording medium through said unloading means.

30. The information recording apparatus according to claim 29, further comprising information receiving means for receiving transmitted information; wherein
said information storage means stores information received by said information receiving means in said information storage means.

31. The information recording apparatus according to claim 29, further comprising information reproducing means for reproducing information from a second recording medium; wherein
said information storage means stores in said information storage means information reproduced by said information reproducing means.

32. The information recording apparatus according to claim 29, further comprising notifying means for notifying charge of fee when said unloading operation is performed through said operating means.

33. A charging method for charging a fee related to an information recording apparatus storing information in an information storage, recording said information stored in said information storage into a first recording medium and unloading said first recording medium based on an unloading operation, the charging method comprising the step of
performing first charging when said information is stored in said information storage, and second charging when said first recording medium is unloaded.

34. The fee charging method according to claim 33, wherein information stored in said information storage is transmitted information.

35. The fee charging method according to claim 33, wherein information stored in said information storage is information reproduced through a second recording medium.

36. The fee charging method according to claim 33, further comprising the step of notifying charging of fee when unloading operation is performed.
